Europäisches Patentamt

European Patent Office

Office européen des brevets

(19)

(11) Veröffentlichungsnummer: **0 264 642 B1**

# (12) EUROPÄISCHE PATENTSCHRIFT

(45) Veröffentlichungstag der Patentschrift: 27.11.91

(51) Int. Cl.⁵: **B23B 27/04**

(21) Anmeldenummer: 87113764.2

(22) Anmeldetag: 21.09.87

(54) **Schneidwerkzeug zur spanabhebenden Metallbearbeitung, insbesondere Nutendrehwerkzeug.**

(30) Priorität: 22.09.86 DE 8625267 U
27.12.86 DE 8634747 U

(43) Veröffentlichungstag der Anmeldung:
27.04.88 Patentblatt 88/17

(45) Bekanntmachung des Hinweises auf die
Patenterteilung:
27.11.91 Patentblatt 91/48

(84) Benannte Vertragsstaaten:
AT CH DE ES FR GB IT LI NL SE

(56) Entgegenhaltungen:
AT-B- 8 087            CH-A- 496 502
DE-A- 2 135 376        DE-A- 3 204 693
DE-U- 8 021 485        DE-U- 8 424 692
DE-U- 8 625 267        DE-U- 8 634 747
FR-A- 2 215 485        GB-A- 2 083 386

WERKSTATTTECHNIK, Band 73, Nr. 11, November 1983, Seiten 681, 682, Berlin; FAUST-
KA "Drehwerkzeuge mit Hartmetall-
Wendschneideplatten für Langdrehautomaten"

(73) Patentinhaber: Holler, Karl-Heinz
Lessingstrasse 17
W-6361 Reichelsheim 1(DE)

(72) Erfinder: Holler, Karl-Heinz
Lessingstrasse 17
W-6361 Reichelsheim 1(DE)

(74) Vertreter: Haar, Lucas H., Dipl.-Ing. Patentanwalt
Königsberger Strasse 23
W-6360 Friedberg/Hessen 1(DE)

## Beschreibung

Die Erfindung betrifft ein Schneidwerkzeug zur spanhabhebenden Metallbearbeitung, insbesondere zum Ein- und Abstechen, mit einem in eine Bohrung am vorderen Ende eines aus einem einteiligen und starren Körper bestehenden Werkzeugschafts einsetzbaren Drehmeißel, der an einem oder beiden Enden eines in die Bohrung einsteckbaren, zylindrischen Mittelabschnitts ausgebildete Schneiden und im Mittelabschnitt eine mittige Aussparung aufweist, in die zur Lagesicherung in axialer Richtung eine Spannschraube eingreift, die in eine radial in den vorderen Bereich der Bohrung mündende Gewindebohrung eingeschraubt ist.

Bei einem bekannten Schneidwerkzeug dieser Art (FR-A-2 215 485) ist die Spannschraube in einer seitlich in die Bohrung des Werkzeugschafts mündenden Gewindebohrung angeordnet und die Aussparung im Mittelabschnitt des Drehmeißels ist in axialer Richtung wesentlich länger als der Durchmesser der Spannschraube, so daß die Lagesicherung des Drehmeißels in axialer Richtung nur durch Reibschluß erfolgt. Diese bekannte Ausgestaltung hat den Nachteil, daß die Lagesicherung des Drehmeißels im Werkzeugschaft nicht schwingungssicher ist, da die den Drehmeißel belastenden Schnittkräfte quer zur Spannrichtung verlaufen. Weiterhin läßt sich beim Wenden oder Wechseln des Drehmeißels die Positionierung seiner Schneide nicht mit der erforderlichen Genauigkeit wiederholen, sondern der Drehmeißel muß jeweils neu eingemessen werden.

Bei einem anderen bekannten Schneidwerkzeug (DE-U-8 021 485) ist der Werkzeugschaft längs geteilt ausgeführt, wobei seine beiden Hälften auf der einen nicht von der Bohrung durchdrungenen Seite durch Paßbolzen und eine Schraube gegenseitig fixiert sind und die Seitenwände der einen Hälfte im Endbereich der Bohrung mit zwei in Richtung auf die Trennebene offenen Schlitzen versehen und von den Schlitzen ausgehen im Bereich der Bohrung gegenüber der Trennebene um etwa 0,2 mm zurückgesetzt sind. Zur Fixierung des Werkzeugs in Längsrichtung ist in der einen Hälfte im Bereich der Bohrung ein federbelasteter, zylindrischer Stift angeordnet, der die Bohrung quer teilweise durchdringt und in eine entsprechend geformte Aussparung im Werkzeug eingreift. Dieser bekannte Werkzeughalter hat den Nachteil, daß von außen angreifende Spannmittel erforderlich sind, durch die die beiden Hälften im Bereich der Innenbohrung zusammengedrückt werden, um auf diese Weise das Werkzeug fest mit dem Schaft zu verbinden. Solche Spannmittel sind aber oft hinderlich und schränken daher die Anwendung des bekannten Schneidwerkzeugs erheblich ein. Bei zahlreichen Drehautomaten fehlen geeignete Spannmittel für ein solches Schneidwerkzeug vollkommen. Ein weiterer Nachteil des bekannten Schneidwerkzeugs ist darin zu sehen, daß die Bohrung zur Aufnahme des Drehmeißels in der Teilungsebene der beiden Hälften verlaufen muß. Eine in Richtung des Spanwinkels geneigte Bohrung ist daher nicht ohne weiteres zu realisieren. Der erforderliche Spanwinkel muß daher durch Abschleifen des Drehstahls erzeugt werden, wodurch dieser geschwächt wird.

Es ist weiterhin ein Abstech-Stahl für eine Drehbank bekannt (DE-A-21 35 376), bei dem der Schaft eine konische, zur Längsachse des Schaftes geneigte Bohrung aufweist, in die eine entsprechend konisch geformte Schneidspitze aus einem Spezialwerkstoff einsetzbar ist. Die Schneidspitze weist innerhalb der Bohrung eine Abflachung auf, gegen die eine Spannschraube spannbar ist, die sich in einer im wesentlichen senkrecht zur Bohrung angeordneten Gewindebohrung im Schaft befindet. Die Spannschraube greift jedoch nicht formschlüssig in eine Vertiefung der Schneidspitze ein, sondern hat lediglich die Aufgabe, die Schneidspitze in einer bestimmten Einbaurichtung zu fixieren. Die Arretierung der Schneidspitze in der konischen Bohrung wird hingegen durch die Konusreibkräfte erzielt. Dieses bekannte Schneidwerkzeug ist nur zum Einstechen oder Plandrehen geeignet, da hierbei die Schneidkräfte bestrebt sind, die Schneidspitze in die konische Richtung hineinzudrücken. Zum Längsdrehen ist die Anordnung jedoch nicht geeignet, da die dann quer zur Konusachse wirksamen Schneidkräfte zu einem Lockern der Konusaufnahme der Schneidspitze führen können. Weiterhin können die Schneidspitzen aufgrund ihrer konischen Ausbildung nur an einem Ende mit einer Schneide versehen sein. Auch die Wiederholgenauigkeit beim Auswechseln der Schneidspitze ist bei dieser bekannten Anordnung gering, da bereits kleine Durchmesserabweichungen im Bereich des Konus zu erheblichen Unterschieden in der Einstecktiefe der Schneidspitze führen.

Bei einem weiteren bekannten Schneidwerkzeug (GB-A-2 083 386) ist ein an beiden Enden mit einer Schneide ausgebildeter Drehmeißel mit einem zylindrischen Mittelabschnitt in einer Zylinderbohrung in einem Werkzeugschaft mit Hilfe einer Exzenterspannvorrichtung gehalten, die auf eine auf der Oberseite des zylindrischen Mittelteils ausgebildete Planfläche einwirkt. Die Einstecktiefe des Drehmeißels wird dabei durch einen Anschlag bestimmt, der sich an dem im Inneren des Werkzeugschafts befindlichen Ende der Zylinderbohrung befindet. Dieses bekannte Schneidwerkzeug hat den Nachteil, daß der Werkzeugschaft in dem der Spanfläche benachbarten Bereich für die Exzenterspannvorrichtung einen vergleichsweise großen Bauraum benötigt, wodurch die Anwendung des Werkzeugs erheblich eingeschränkt wird. Weiterhin ist eine genaue Positionierung des Drehmeißels nur gewährleistet, wenn die an dem Anschlag anliegende Schneide nicht beschädigt ist.

Der Erfindung liegt die Aufgabe zugrunde, ein Schneidwerkzeug der eingangs genannten Art zu schaffen, das einfach und kostengünstig herstellbar und einfach zu handhaben ist und das auch beim Wenden oder Wechseln des Drehmeißels die erforderliche Wiederholgenauigkeit hinsichtlich der Schneidenposition gewährleistet. Weiterhin soll mit der Erfindung ein Schneidwerkzeug geschaffen werden, das eine große Anwendungsbreite hat und das sich für alle gängigen Werkzeugspannvorrichtungen bei Drehbänken und Drehautomaten eignet.

Die Aufgabe wird erfindungsgemäß dadurch gelöst, daß die Bohrung in der Passungstoleranz H 7 und der Mittelabschnitt des Drehmeißels in der Passungstoleranz h 6 oder j 6 zur Bildung eines Schiebesitzes fein bearbeitet sind, daß die Gewindebohrung von der Oberseite des Werkzeugschafts in die Bohrung mündet und daß die Spannschraube auf ihrer Unterseite einen Zylinderabschnitt hat, der formschlüssig in die Aussparung im Drehmeißel eingreift.

Das erfindungsgemäße Schneidwerkzeug ist außerordentlich einfach herzustellen, da der Werkzeugschaft lediglich mit einer paßgenauen Bohrung zu versehen ist und zur Herstellung des Drehmeißels als Halbzeug Material verwendet werden kann, dessen Durchmesser durch Außenrundschleifen die erforderliche Genauigkeit erhält. Der durch die angegebenen Passungstoleranzen festgelegte Schiebesitz erlaubt das Ineinanderfügen von Werkzeugschaft und Drehmeißel von Hand und bietet gleichzeitig eine ausreichend stabile Lagerung. Vorzugsweise ist am Ende der Bohrung im Werkzeugschaft eine Entlüftungsbohrung vorgesehen, um das Einsetzen des Drehmeißels zu erleichtern. Durch den paßgenauen Sitz des Drehmeißels in der Bohrung des Werkzeugschafts und das formschlüssige Eingreifen der Spannschraube in die im Drehmeißel vorgesehene Aussparung werden die auftretenden Schneidkräfte sowohl in Längsrichtung des Drehmeißels als auch quer dazu sicher aufgenommen, so daß sich insgesamt eine stabile Lagerung für den Drehmeißel ergibt, durch die ein Rattern des Drehmeißels vermieden ist. Da der Werkzeugschaft durch einen einstückigen, starren Körper gebildet wird, sind zur Halterung des Drehmeißels keine zusätzlichen Spannvorrichtungen erforderlich. Der Werkzeugschaft kann daher ohne Schwierigkeit den verschiedenen Spannsystemen von Drehbänken und Drehautomaten angepaßt werden. Die Aufnahme von Schneidkräften in Längsrichtung des Drehmeißels und quer dazu erlaubt einen Einsatz des Drehmeißels zum Einstechen und Plandrehen als auch zum Längs-Runddrehen, so daß das erfindungsgemäße Schneidwerkzeug vielseitig anwendbar ist. Weiterhin kann der erfindungsgemäße Drehmeißel aufgrund seiner schlanken Form zum Stirnstechen verwendet werden, wobei kleine Stirnstechdurchmesser erreicht werden können. Die erforderliche Wiederholgenauigkeit beim Umsetzen des Drehmeißels wird durch das formschlüssige Eingreifen der Spannschraube in die Aussparung im Drehmeißel gewährleistet. Die Doppelschneiden-Ausführung des erfindungsgemäßen Drehmeißels ermöglicht eine rationelle Fertigung ohne jedoch die Anwendung des Drehmeißels einzuschränken. So wird die Abstützung des Drehmeißels ausschließlich durch seinen zylindrischen Mittelteil gewährleistet, so daß der Drehmeißel auch nach dem Abbrechen einer Schneide allein mit der anderen Schneide verwendet werden kann.

Vorzugsweise ist nach einem weiteren Vorschlag der Erfindung die Bohrung in einem Winkel zur Längsachse des Werkzeugschaftes im Sinne einer Vergrößerung des Spanwinkels am Drehmeißel geneigt. Dies hat den Vorteil, daß zur Schaffung des erforderlichen Spanwinkels die Schneide des Drehmeißels nicht durch ein Schleifen im Bereich ihrer höchsten Beanspruchung geschwächt wird. Weiterhin kann vorgesehen sein, daß die Bohrung in horizontaler Richtung in einem Winkel zur Längsachse des Werkzeugschaftes derart verläuft, daß die Schneidenecke über die seitliche Begrenzungsebene des Werkzeugschaftes hinausragt. Durch diese Ausgestaltung wird das Plandrehen größerer Stirnflächen ermöglicht. Eine andere Ausgestaltung des erfindungsgemäßen Schneidwerkzeugs zum Plandrehen oder Planstechen kann auch darin bestehen, daß der Drehmeißel an einem Ende eine Schneide hat, deren Breite um soviel größer ist als der Durchmesser des zylindrischen Mittelabschnitts, daß ihre eine Seitenschneide über die seitliche Begrenzungsebene des Werkzeugschaftes hinausragt.

Eine besonders vorteilhafte Ausgestaltung des erfindungsgemäßen Schneidwerkzeugs besteht darin, daß der Drehmeißel an beiden Enden eine Stirnschneide und beiderseits der Stirnschneide je eine Seitenschneide aufweist. Hierdurch eignet sich das Schneidwerkzeug zum Einstechen, Planstechen und gleichzeitigem Längsdrehen in beiden Richtungen, so daß insbesondere Nuten unterschiedlicher Tiefe und Breite mit einem einzigen Werkzeug hergestellt werden können. Wird der Drehmeißel parallel zur Drehachse des Werkstücks eingespannt, so kann Plandrehen und Stirnstechen auch über größere Durchmesser mit dem gleichen Werkzeug in beliebiger Kombination durchgeführt werden. Um den beiden Seitenschneiden einen ausreichenden Spanwinkel zu geben, kann nach einem weiteren Vorschlag der Erfindung die Spanfläche des Drehmeißels eine Hohlkehle bilden. Weiterhin laufen vorzugsweise die beiden Seitenschneiden vom zylindrischen Mittelabschnitt aus mit kleinem Winkel auseinander und schaffen dadurch einen Freiwinkel für das Einstechen.

Die Mantelfläche des zylindrischen Mittelabschnitts des Drehmeißels kann im Bereich der Spannschraube einen ringförmigen Freistich haben. Hierdurch wird die beim Einsetzen des Drehmeißels in den Werkzeugschaft auftretende Reibung vermindert und es werden zur Vermeidung von Zwangskräften eindeutige Stützbereiche geschaffen, mit denen der Drehmeißel an der Bohrung anliegt. Aus Handhabungsgründen wird die Spannschraube bevorzugt auf der Oberseite des Werkzeugschafts angeordnet. Die erforderliche Lagesicherung des Drehmeißels im Werkzeugschaft kann aber auch erreicht werden, wenn die Spannschraube von der Seite oder von unten in den Werkzeugschaft einschraubbar ist.

Vorzugsweise ist der Drehmeißel aus einem Abschnitt aus Rundmaterial hergestellt, an dessen Enden zur Bildung der Schneiden Freiflächen und Spanflächen angeschliffen sind. Diese Herstellung ist außerordentlich einfach und benötigt kein formgesintertes Ausgangsmaterial. Als Werkstoff zur Herstellung des Drehmeißels können sowohl Sonderstähle, harte Metalle, Carbide und andere keramische Schneidwerkstoffe verwendet werden.

Um den insbesondere für schmale Einstiche dünnen Drehmeißel auch bei größeren Einstichtiefen abzustützen, kann der Werkzeugschaft eine bis zur Schneidenfreifläche reichende Stützrippe in der Breite des Schneidenbereichs haben, deren Oberseite eine zylindrische Hohlkehle aufweist, die in der Verlängerung der Bohrungsfläche liegt. Durch diese Stützrippe wird der Drehstrahl sowohl beim Einstechen als auch beim Längsdrehen sicher abgestützt. Es können daher Einstichtiefen erreicht werden, die das mehrfache der Einstichbreite betragen. Beim Stirnstechen ist die Stützrippe entsprechend dem Stirnstech-Durchmesser gebogen.

Die Erfindung betrifft weiterhin ein Schneidwerkzeug zum Stirnstechen, bestehend aus einem Werkzeugschaft mit einem an seinem vorderen Ende durch einen kreiszylindrischen, in seiner Krümmung dem Stirnstechdurchmesser angepaßten Wandabschnitt gebildeten Schweif und einem an dem Schweif lösbar befestigten, auswechselbaren Drehmeißel mit einer Schneide, deren Breite größer ist als die Wanddicke des Schwerts.

Bei bekannten Drehmeißeln dieser Art (DE-U-8 424 692) wird die aus einem besonderen Schneidwerkstoff hergestellte Schneide auf der Oberseite des Schweifs durch einen Spannfinger festgehalten, der den Schweif übergreift und durch eine Spannschraube mit dem Werkzeugschaft verbunden ist. Zur seitlichen Zentrierung der Schneide weist die Oberseite des Schweifs eine prismatische Längsnut auf, in die die entsprechend geformte Schneidenunterseite eingreift. Dieser bekannte Drehmeißel ist nicht für größere Stirnstechtiefen geeignet, da die Haltekräfte des Spannfingers bei den gegebenen Platzverhältnissen mit zunehmender Länge des Schweifes stark abnehmen. Auch in Hinsicht auf die Breite und den Durchmesser eines stirnseitigen Einstichs sind dem bekannten Drehmeißel nach unten durch die Form der Schneidenhalterung erhebliche Grenzen gesetzt.

Mit der Erfindung wird demgegenüber ein Drehmeißel zum Stirnstechen geschaffen, der für Stirnstiche großer Tiefe, geringer Breite und geringer Durchmesser geeignet ist und der sich einfach und kostengünstig herstellen läßt.

Erfindungsgemäß ist zur Befestigung des Drehmeißels der Schweif mit einer Stufenbohrung versehen, deren Mittelachse in der Mitte der Wand des Schweifs und parallel zu seiner Zylinderachse verläuft, deren vorderer in der Stirnfläche des Schweifs mündender Bohrungsabschnitt im Durchmesser größer und deren hinterer Bohrungsabschnitt im Durchmesser kleiner ist als die Wanddikke des Schweifs, und der Drehmeißel hat den Wandflächen der Stufenbohrung angepaßte Zylinderoberflächen, die in beide Bohrungsabschnitte der Stufenbohrung zur Bildung eines Schiebesitzes spielfrei eingreifen und ist durch Spannmittel im hinteren Bohrungsabschnitt festspannbar und der obere, der Spanfläche des Drehmeißels benachbarte Teil des Schweifs ist bis auf einen kleinen, den Drehmeißel übergreifenden Teil des vorderen Bohrungsabschnitts verkürzt bzw. ausgespart.

Auf diese Weise wird ein Schneidwerkzeug zum Stirnstechen geschaffen, bei dem die Halterung des auswechselbaren Drehmeißels ausschließlich im Bereich des vorderen Endes des Schweifs angeordnet ist, so daß die Tiefe des Einstichs nur durch die Länge und Steifigkeit des Schweifs und nicht durch die Mittel zur Halterung des Drehmeißels begrenzt ist. Der erfindungsgemäße Drehmeißel ist daher für große Einstichtiefen geeignet. Die Halterung des Drehmeißels in einer zylindrischen Stufenbohrung hat weiterhin den Vorteil, daß sie bei hoher Stabilität nur geringen Bauraum benötigt, so daß auch tiefe Stirnstiche von geringer Breite hergestellt werden können. In der Praxis wurden Stirnstichbreiten von 3 mm realisiert. Weiterhin ermöglicht die erfindungsgemäße Halterung und die damit verbundene zylindrische Ausgangsform des Drehmeißels die Herstellung von Stirnstichen besonders kleiner Durchmesser von z.B. etwa 14 mm. Die erfindungsgemäße Halterung des Drehmeißels ist einfach herstellbar, indem vor der endgültigen Fertigstellung der Mantelflächen des Schweifs die Stufenbohrung hergestellt und feingebohrt wird. Anschließend werden durch Bohren, Drehen oder Schleifen die inneren und äußeren Mantelflächen des Schweifes so weit nachgearbeitet, daß von dem Bohrungsabschnitt größeren Durchmessers lediglich die in Umfangsrichtung weisenden Bereiche der Bohrungswand erhalten bleiben, während die radial nach innen und radial nach außen weisenden Wandbereiche entfernt sind. Der aus einem zylindrischen Rohling gleichen Durchmessers geschliffene Drehmeißel steht aus den entfernten Wandbereichen der Stufenbohrung hervor, wodurch sich eine Einstechbreite ergibt, die geringfügig größer ist als die Wanddicke des Schweifes. Die Zylinderflächen des Drehmeißels lassen sich sehr genau herstellen, so daß der Drehmeißel praktisch spielfrei in die Stufenbohrung eingreift, wodurch sich eine stabile und schwingungsfreie Halterung und eine gute Übertragung der Schnittkräfte vom Drehmeißel auf den Werkzeugschaft ergibt.

Erfindungsgemäß ist weiterhin vorgesehen, daß der Schweif sich über einen Umfangswinkel von wenigstens 180° erstreckt. Auf diese Weise erhält der Schweif eine außerordentlich große Steifigkeit, so daß auch bei geringen Einstechbreiten und kleinen Einstechdurchmessern große Einstechtiefen in einer verhältnismäßig kurzen Bearbeitungszeit hergestellt werden können. Der Freiraum oberhalb des Schweifes dient zur Aufnahme und Ableitung der Drehspäne.

Eine noch größere Steifigkeit läßt sich erzielen, wenn der Schweif durch einen geschlossenen Kreiszylinder gebildet ist, der eine an die Spanfläche der Schneide angrenzende Aussparung für die Spanableitung aufweist.

Eine für das Stirnstechen günstige Spanform wird erfindungsgemäß dadurch erzielt, daß die Spanfläche der Schneide durch eine Hohlkehle gebildet ist, deren Krümmungsachse etwa senkrecht auf der Schneidenkante steht. An die Hohlkehle kann sich nach einem weiteren Vorschlag der Erfindung eine von der Hohlkehle aus nach oben ansteigende und schräg zur Mittelachse des Schweifes verlaufende Spanleitfläche anschließen, um das Herausgleiten der Späne aus dem Ringspalt des Einstichs zu erleichtern.

Als Spannmittel zum Festhalten des Drehmeißels in der Stufenbohrung und zum Sichern gegen Verdrehen kann erfindungsgemäß eine Spannschraube in einer Gewindebohrung vorgesehen sein, die senkrecht in den hinteren Bohrungsabschnitt einmündet. Je nach Ausbildung des Schweifs kann die Spannschraube radial oder tangential zum Schweif angeordnet sein.

Der Drehmeißel des Stirnstechwerkzeugs ist erfindungsgemäß aus einem Abschnitt aus Rundmaterial hergestellt, an das nach dem Rundschleifen des abgestuften Außendurchmessers im Bereich des im Durchmesser größeren Abschnitts die zur Bildung der Schneide erforderlichen Frei- und Spanflächen angeschliffen sind. Auf diese Weise ist die Herstellung des Drehmeißels außerordentlich einfach und es wird kein formgesintertes Ausgangsmaterial benötigt. Als Werkstoff zur Herstellung der Schneide kommen Sonderstähle, Hartmetalle, Carbide, sowie andere keramische und metallische Schneidwerkstoffe in Frage.

Eine weitere vorteilhafte Ausgestaltung der Erfindung kann darin bestehen, daß an einem Werkzeugschaft konzentrisch ineinander mehrere zylindrische Schweife vorgesehen sind, von denen jeder in einer Stufenbohrung einen Drehmeißel trägt. Mit einem solchen Werkzeug ist beispielsweise das Bearbeiten von Lamellenstaubdichtungen möglich, bei denen in geringem Abstand verschiedene Axialnuten nebeneinander angeordnet sind. Wurden für einen solchen Bearbeitungsvorgang seither mehrere verschiedene Drehwerkzeuge eingesetzt, so ermöglicht die erfindungsgemäße Ausgestaltung und Halterung der Drehmeißel die Bildung eines einzigen Werkzeugs, mit dem die Axialnuten in einem Arbeitsgang eingestochen werden können. Die Drehmeißel können dabei je nach Tiefe und Breite der Axialnuten einschneidig und gestuft oder zweischneidig ausgebildet sein.

Die erfindungsgemäße Halterung eines Drehmeißels eignet sich auch zur Herstellung von Bohrkronen, indem in die Stirnfläche eines hohlzylindrischen Körpers mehrer Drehmeißel eingesetzt werden, wobei die Halterung der Drehmeißel derjenigen des beschriebenen Stirnstechwerkzeugs entspricht.

Die Erfindung betrifft ferner ein Schneidwerkzeug zum Einstechen, bestehend aus einem Werkzeugschaft mit einem an seinem vorderen Ende angeordneten, durch eine ebene Platte gebildeten Schwert und einem an dem Schwert lösbar befestigten, auswechselbaren Drehmeißel, dessen Schneide breiter ist als die Wanddicke des Schwerts, siehe DE-A-2 135 376. Erfindungsgemäß ist hierbei vorgesehen, daß das Schwert mit einer Stufenbohrung versehen ist, deren Mittelachse etwa in seiner Mittelebene verläuft und deren vorderer, in der Stirnfläche des Schwerts mündender Bohrungsabschnitt im Durchmesser größer und deren hinterer Bohrungsabschnitt im Durchmesser kleiner ist als die Wanddicke des Schwerts, daß der Drehmeißel mit den Wandflächen der Stufenbohrung angepaßten Zylinderflächen in beide Bohrungsabschnitte der Stufenbohrung eingreift und durch Spannmittel im hinteren Bohrungsabschnitt festspannbar ist, und daß der obere, der Spanfläche der Schneide benachbarte Teil des Schwerts bis auf einen kleinen, den Drehmeißel übergreifenden Teil des vorderen Bohrungsabschnitts verkürzt bzw. ausgespart ist.

Weitere Vorteile und Einzelheiten der Erfindung ergeben sich aus der nachfolgenden Beschreibung eines bevorzugten Ausführungsbeispiels, das in der Zeichnung dargestellt ist. Es zeigen

Figur 1 einen Längsschnitt und

Figur 2 eine perspektivische Darstellung eines erfindungsgemäßen Schneidwerkzeugs mit auswechselbarem Drehmeißel, das zum Einstechen und Längsdrehen geeignet ist,

Figur 3 eine perspektivische Darstellung des vorderen Endes eines erfindungsgemäßen Schneidwerkzeugs zum Stirnstechen,

Figur 4 eine Seitenansicht des Schneidwerkzeugs gemäß Figur 3,

Figur 5 eine Vorderansicht des Schneidwerkzeugs gemäß Figur 3 und

Figur 6 eine perspektivische Darstellung eines Stirnstechvorgangs mit einem erfindungsgemäßen Schneidwerkzeug.

Das in der Zeichnung dargestellte Schneidwerkzeug besteht aus einem stabförmigen Werkzeugschaft 1 von rechteckigem Querschnitt, der auf einem Werkzeughalter einer Drehbank befestigbar ist. An der Stirnseite 2 des Werkzeugschafts 1 ist eine Stützrippe 3 ausgebildet, die gegenüber seinen Seitenflächen 4 zurückgesetzt ist. Über der Stützrippe 3 ist in die Stirnseite 2 eine Bohrung 5 vorgesehen, die in der Oberseite der Stützrippe 3 ausläuft. Die Oberseite der Stützrippe 3 bildet somit eine Hohlkehle 6, die sich übergangslos an die Mantelfläche der Bohrung 5 anschließt. Die Bohrung 5 und die Hohlkehle 6 sind in einem Winkel zur Längsachse des Werkzeugschafts 1 derart geneigt, daß die Mündung der Bohrung 5 nach oben zeigt. Die Bohrung ist feinst bearbeitet, zum Beispiel gerieben, um den Bohrungsdurchmesser in der Passungstoleranz H 7 zu erhalten. Von der Oberseite 7 des Werkzeugschafts 1 mündet eine Gewindebohrung 8 in den vorderen Bereich der Bohrung 5. In die Gewindebohrung 8 ist eine Spannschraube 9 mit einem Innensechskant eingeschraubt, die auf ihrer Unterseite einen Zylinderabschnitt 10 hat. Vom Ende der Bohrung 5 führt eine Entlüftungsbohrung zur Unterseite des Werkzeugschafts 1.

Der Werkzeugschaft 1 dient zur Halterung eines Drehmeißels 11, der aus einem besonderen Schneidwerkstoff, zum Beispiel Hartmetall oder Keramik, besteht. Der Drehmeißel 11 ist symmetrisch ausgebildet und besteht aus einem zylindrischen Mittelabschnitt 12, an den sich auf beiden Seiten jeweils Schneidenabschnitte 13, 14 anschließen. Der Mittelabschnitt 12 hat zwei zylindrische Lagerbereiche 15, die in der Passungstoleranz h 6 oder j 6 geschliffen sind, so daß sie mit der Bohrung 15 einen praktisch spielfreien Schiebesitz bilden, der es zuläßt, daß der Drehmeißel 11 von Hand in die Bohrung 5 eingeschoben bzw. aus ihr herausgezogen werden kann. Zwischen den Lagerbereichen 15 ist ein Einstich 16 und eine ebene Spannfläche 17 ausgebildet. Die Schneidenabschnitte 13, 14 sind durch Abschleifen der zylindrischen Ausgangsform des Mittelabschnitts 12 gebildet und haben jeweils eine Stirnschneide 18 mit einer Freifläche 19 und zwei Seitenschneiden 20 mit Freiflächen 21. Der Spanwinkel der Seitenschneiden 20 wird durch eine hohlzylindrische Form der Spanfläche 22 erzielt. Hierdurch erhält auch die Stirnschneide 18 eine leicht gebogene Form, die beim Einstechen einen günstigen Einfluß auf die Spanbildung hat. Die Seitenschneiden 20 und die Freiflächen 21 divergieren leicht zur Stirnschneide 18 hin und schaffen dadurch den für das Einstechen erforderlichen Freigang.

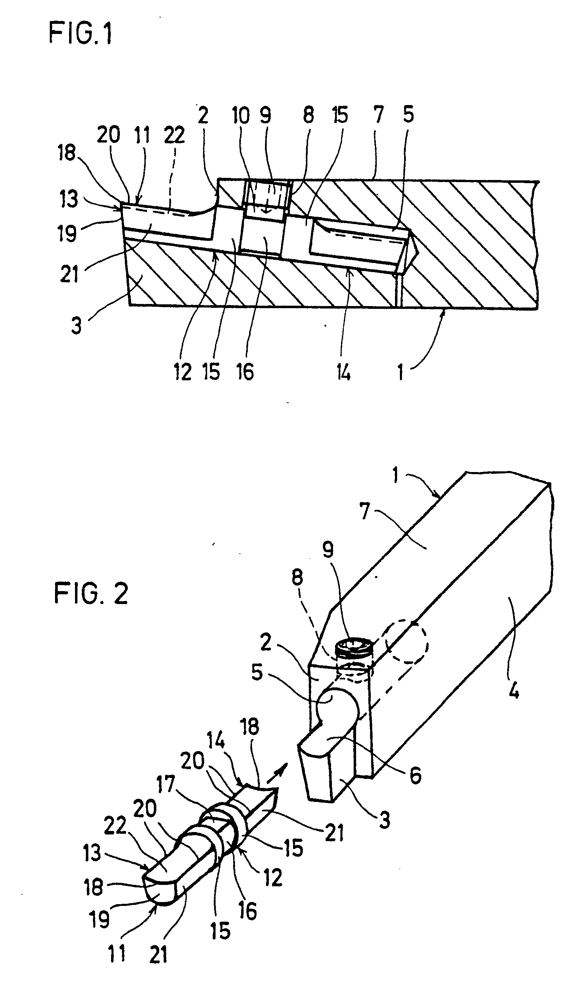

Figur 1 zeigt den Drehmeißel in seiner Einbaulage im Werkzeugschaft 1. Die Lagerbereiche 15 befinden sich in der Bohrung 5 und die Spannschraube 9 ist fest gegen die Spannfläche 17 geschraubt. Ihr zylindrischer Abschnitt greift dabei spielfrei zwischen die Lagerbereiche 15 und bewirkt dadurch eine genaue Lagesicherung des Drehmeißels 11 in axialer Richtung. Der Schneidenabschnitt 13 ruht mit seiner Zylinderfläche in der Hohlkehle 6 der Stützrippe 3 und ist dadurch sicher gegen die beim Drehen auftretenden Schnittkräfte abgestützt. Der Schneidenabschnitt 14 befindet sich in der Bohrung 5, wo er geschützt zur späteren Verwendung bereitgehalten wird, wenn der Schneidenabschnitt 13 abgenutzt ist.

Das beschriebene Schneidwerkzeug ist für Außeneinstiche und zum Längsdrehen in beiden Vorschubrichtungen geeignet. Hierbei kann die Einstechtiefe ein Mehrfaches der Einstichbreite betragen. Die Mindesteinstichbreite ist durch die Breite der Stirnschneide 18 vorgegeben. Breitere Einstiche lassen sich vorteilhaft dadurch erzielen, daß zunächst mit der Stirnschneide 18 bis auf die gewünschte Einstechtiefe in das Werkstück hineingefahren wird und anschließend durch Längsdrehen der Einstich in der gewünschten Weise verbreitert wird. Größere Einstiche können auch durch eine abwechselnde Folge von Einstech- und Längsdreh-Operationen ausgebildet werden. So kann beispielsweise zunächst mit Hilfe der Stirnschneide 18 einige Millimeter eingestochen und anschließend mit einer Seitenschneide 20 ein Stück längsgedreht werden. An den Längsdrehvorgang schließt sich ein erneuter Einstechvorgang und dann ein Längsdrehvorgang in der entgegengesetzten Richtung an. Durch ein derartiges mäanderförmiges Hineinfahren in das Werkstück werden Totzeiten vermieden und es lassen sich für die jeweilige Drehoperation optimale Spanquerschnitte wählen.

Das beschriebene Schneidwerkzeug eignet sich auch zum Stirnstechen, wobei die Stützrippe 3 jedoch der Form des stirnseitigen Einstichs angepaßt sein muß. Für kleine Stirnstichradien kann auch ein Werkzeugschaft verwendet werden, der keine Stützrippe aufweist, so daß der Drehmeißel mit seinem Schneidenabschnitt frei hervorsteht. Hierbei ist lediglich erforderlich, daß die Vorschübe beim Stirnstechen der Belastbarkeit des Drehmeißels angepaßt werden. Auch beim Stirnstechen ist es möglich, durch radiale Bewegung des Drehmeißels die Einstichbreite zu vergrößern.

Zum Plandrehen wird das gezeigte Schneidwerkzeug in gleicher Position eingesetzt wie beim Stirnstechen, d.h., mit parallel zur Drehachse ausgerichtetem Werkzeugschaft 1. Schließlich lassen sich mit dem erfindungsgemäßen Schneidwerkzeug auch Inneneinstiche realisieren, wobei allerdings für kleine Innendurchmesser Drehmeißel verwendet werden, die nur einen Schneidenabschnitt haben. Der Werkzeughalter für das Inneneinstechen hat zumindest im Endbereich zweckmäßig einen runden Querschnitt und die Bohrung zur Aufnahme des Drehmeißels ist quer zu seiner Längsachse angeordnet.

Für besondere Drehoperationen, beispielsweise zum Planstechen mit größerer Einstechtiefe, wird erfindungsgemäß ein Drehmeißel verwendet, dessen Stirnschneide soviel breiter ist als der Durchmesser der Bohrung 5, daß die Schneidenecke über die seitliche Begrenzungsebene des Werkzeugschafts 1 hinausragt. Weiterhin kann für bestimmte Drehoperationen vorgesehen sein, daß die Bohrung 5 im Werkzeugschaft 1 in horizontaler Richtung gesehen in einem Winkel zur Längsachse des Werkzeugschafts 1 verläuft, und zwar derart, daß die Schneidenecke des herausragenden Schneidenabschnitts über die seitliche Begrenzungsebene des Werkzeugschafts 1 hervorsteht.

Eine Weiterbildung der Erfindung kann auch darin bestehen, daß in einem Werkzeugschaft nebeneinander mehrere Bohrungen mit Drehmeißeln der beschriebenen Art vorgesehen sind, um auf diese Weise gleichzeitig nebeneinander mehrere Einstiche erzeugen zu können. Weiterhin können die erfindungsgemäßen Drehmeißel unterschiedliche Schneidenformen haben. Beispielsweise kann der Stirnbereich des Drehmeißels spitz oder rund angeschliffen sein oder auch eine Stufenkontur haben, je nach benötigter Anwendung. Es sind auch Ausgestaltungen des erfindungsgemäßen Drehmeißels denkbar, bei denen der Mittelabschnitt drei zylindrische Lagerbereiche hat, zwischen denen zwei Spannstellen ausgebildet sind. Hierdurch wird die Möglichkeit geschaffen, den Drehmeißel in zwei verschiedenen Einstecktiefen im Werkzeugschaft zu befestigen, um auf diese Weise den Schneidenabschnitt je nach Einspannung teilweise freistehend oder vollkommen aufliegend nutzen zu können.

Wie die Darlegungen zeigen, ist das erfindungsgemäße Schneidwerkzeug einfach im Aufbau und in der Herstellung und nahezu universal einsetzbar. Insbesondere in Verbindung mit Drehautomaten bietet das erfindungsgemäße Schneidwerkzeug große Vorteile, da der Werkzeugschaft aufgrund seiner einfachen Herstellung leicht in den Drehautomaten integriert werden kann. Auch die Handhabung des erfindungsgemäßen Schneidwerkzeugs ist außerordentlich einfach und benötigt keine aufwendigen Einstellmaßnahmen beim Wenden oder Wechseln des Drehmeißels. Der Drehmeißel hat eine zweckmäßige Form, die sich auch beim Nachschleifen der Schneiden gut handhaben läßt.

In der Vielfalt der Anwendungsmöglichkeiten werden mit der Erfindung bekannte Schneidwerkzeuge übertroffen, bei denen der Drehmeißel miteinem Spannfinger in einer prismatischen Nut gehalten ist, weil die erfindungsgemäße Halterung des Drehmeißels wesentlich steifer ist und einen geringern Bauraum beansprucht.

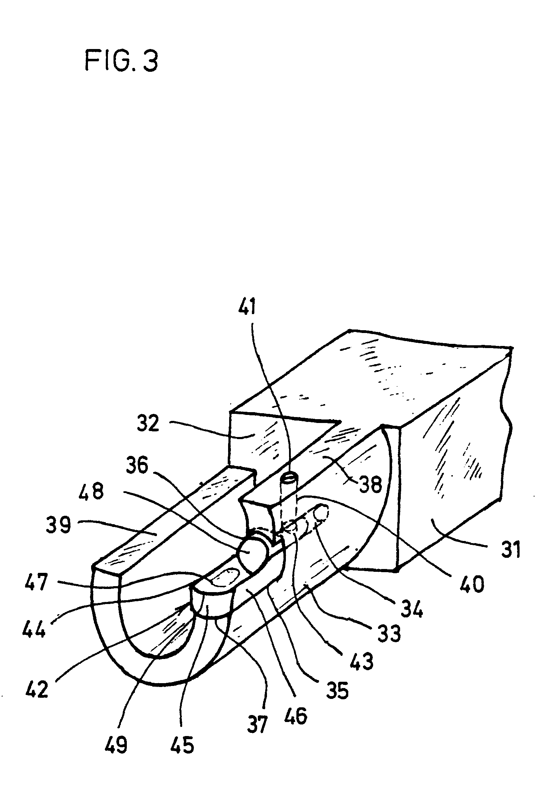

Das in den Figuren 3 bis 5 dargestellte Schneidwerkzeug besteht aus einem stabförmigen Werkzeugschaft 31 von rechteckigem Querschnitt, der beispielsweise auf einem Werkzeughalter einer Drehbank oder in einem Drehautomat befestigbar ist. An der Stirnseite 32 des Werkzeugschafts 31 ist ein Schweif 33 ausgebildet, der die Form eines Wandabschnitts eines Kreishohlzylinders hat und sich über einen Umfangswinkel von etwas mehr als 180° erstreckt. In der Wand des Schweifs 33 ist parallel zu seiner Zylinderachse eine Stufenbohrung mit einem hinteren im Durchmesser kleineren Bohrungsabschnitt 34 und einem vorderen im Durchmesser größeren Bohrungsabschnitt 35 ausgebildet. Der Durchmesser des Bohrungsabschnitts 34 ist geringer als die Wanddicke des Schweifs 33, so daß dieser Bohrungsabschnitt vollständig ausgebildet ist. Der Durchmesser des Bohrungsabschnitts 35 ist dagegen grösser als die Wanddicke des Schweifs 33, so daß die radial nach innen und radial nach außen weisenden Wandbereiche des Bohrungsabschnitts 35 nicht ausgebildet sind. Weiterhin weist der Schweif 33 im Bereich des Bohrungsabschnitts 35 einen stufenförmigen Absatz auf, durch den der obere Wandbereich 36 des Bohrungsabschnitts 35 bis auf einen Bruchteil der Länge des unteren Wandbereichs 37 des Bohrungsabschnitts 35 verkürzt ist. Der Bohrungsabschnitt 35 der Stufenbohrung wird somit lediglich durch die Wandbereiche 36, 37 verkörpert. Nach oben wird der Schweif 33 durch ebene Flächen 38, 39 begrenzt. Die Fläche 38 schließt sich unmittelbar an die obere Fläche des Werkzeugschafts 31 an. Die Fläche 39 befindet sich etwa auf gleicher Höhe wie die Stufenbohrung und endet an der Stirnseite 32. Von der Fläche 38 verläuft im Innern des Schweifs 33 eine Gewindebohrung 40 etwa in tangentialer Richtung nach unten, bis sie im rechten Winkel in den Bohrungsabschnitt 34 mündet. In die Gewindebohrung 40 ist eine Spannschraube 41 eingeschraubt.

Die Bohrungsabschnitte 34, 35 nehmen einen Drehmeißel 42 auf, der aus einem in den Bohrungsabschnitt 34 eingreifenden zylindrischen Zapfen 43 und einem Schneidenkörper 44 besteht und aus einem zylindrischen Rohling hergestellt ist, dessen Außendurchmesser paßgenau dem Innendurchmesser des Borhungsabschnitts 35 entspricht. An diesen Rohling sind Freiflächen 45, 46, eine hohlkehlförmige Spanfläche 47 und eine Spanleitfläche 48 angeschliffen. Die Freifläche 45 und die Spanfläche 47 bilden die Schneide 49, deren Breite die Wanddicke des Schweifs 33 übersteigt. Im Bereich der Wandbereiche 36, 37 ist die Zylinderwandfläche des Rohlings des Schneidenkörpers 44 unverändert vorhanden, so daß der Schneidenkörper 44 paßgenau zwischen die Wandbereiche 36, 37 einschiebbar ist und die beim Zerspanen auf den Schneidenkörper einwirkenden Kräfte an den Wandbereichen 36, 37 abgenützt werden. Der Drehmeißel 42 wird mit Hilfe der Spannschraube 41, die gegen eine Spannfläche am Zapfen 43 spannbar ist, in ihrer Einbaulage gehalten und gegen Verdrehen gesichert.

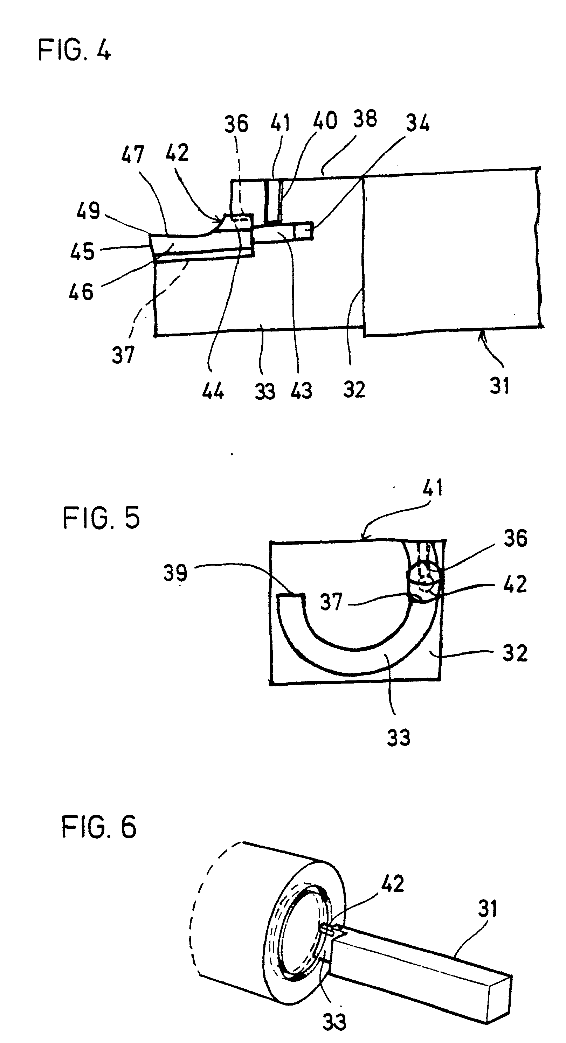

Der Drehvorgang mit Hilfe des dargestellten Schneidwerkzeugs ist in Figur 6 der Zeichnung veranschaulicht. Hierbei ist zur Vereinfachung der Darstellung der Schweif weniger gekrümmt und er erstreckt sich nur über einen Umfangswinkel von ca. 45°. Zur Erzeugung des Stirneinstichs wird der Drehmeißel 42 in Richtung der Drehachse des in Drehung versetzten Werkstücks gegen dessen Stirnseite bewegt, wobei die Schneide 49 in das Werkstück eindringt und den Werkstoff im Bereich einer kreisringförmigen Ausnehmung zerspant. Die Darstellung zeigt, daß die axiale Länge des Schweifs für die Tiefe des herstellbaren Einstichs maßgebend ist. Die axiale Länge des Schweifes ist von der erfindungsgemäßen Befestigung des Drehmeißels unabhängig, so daß die Grenzen der Einstechtiefe nur noch in der Steifigkeit des Schweifs liegen.

Diese kann, wie das in den Figuren 3 - 5 dargestellte Ausführungsbeispiel zeigt, durch eine Erstreckung des Schweifs über einen Umfangswinkel von mehr als 180° erheblich vergrößert werden, so daß sich auch bei verhältnismäßig kleinen Stirnstichdurchmessern Stirnstichtiefen von mehr als dem doppelten des Stirnstichdurchmessers erreichen lassen.

Der beschriebene abgestufte Drehmeißel kann in einer abgewandelten Ausführungsform, in der der zylindrische Schweif durch eine ebenes, als Platte ausgebildetes Schwert ersetzt ist, auch vorteilhaft zum radialen Einstechen verwendet werden, wenn beispielsweise teife radiale Einstiche hergestellt werden sollen, die eine geringe Breite haben.

Ebenso ist ein solcher Drehmeißel zum Abstechen vorteilhaft einsetzbar, um den Verlust an zerspantem Material klein zu halten.

## Patentansprüche

1. Schneidwerkzeug zur spanabhebenden Metallbearbeitung, insbesondere zum Ein- und Abstechen, mit einem in eine Bohrung (5) am vorderen Ende eines aus einem einteiligen und starren Körper bestehenden Werkzeugschafts (1) einsetzbaren Drehmeißel (11), der an einem oder beiden Enden eines in die Bohrung einsteckbaren, zylindrischen Mittelabschnitts ausgebildete Schneiden und im Mittelabschnitt (12) eine mittige Aussparung (16, 17) aufweist, in die zur Lagsicherung in axialer Richtung eine Spannschraube (9) eingreift, die in eine radial in den vorderen Bereich der Bohrung mündende Gewindebohrung eingeschraubt ist, **dadurch gekennzeichnet,** daß die Bohrung (5) im Werkzeugschaft (1) in der Passungstoleranz H 7 und der Mittelabschnitt (12) des Drehmeißels (11) in der Passungstoleranz h 6 oder j 6 zur Bildung eines Schiebesitzes fein bearbeitet sind, daß die Gewindebohrung (8) von der Oberseite (7) des Werkzeugschafts (1) in die Bohrung (5) mündet und daß die Spannschraube (9) auf ihrer Unterseite einen Zylinderabschnitt (10) hat, der formschlüssig in die Aussparung (16, 17) im Drehmeißel (11) eingreift (Toleranzfelder nach DIN 7151).

2. Schneidwerkzeug nach Anspruch 1, **dadurch gekennzeichnet,** daß die Bohrung (5) in einem Winkel zur Längsachse des Werkzeugschaftes (1) im Sinne einer Vergrößerung des Spanwinkels am Drehmeißel (11) geneigt ist.

3. Schneidwerkzeug nach Anspruch 1 oder 2, **dadurch gekennzeichnet,** daß die Bohrung (5) in horizontaler Richtung in einem Winkel zur Längsachse des Werkzeugschaftes (1) verläuft, derart, daß die Schneidenecke über die seitliche Begrenzungsebene des Werkzeugschaftes (1) hinausragt.

4. Schneidwerkzeug nach einem vorhergehenden Anspruch, **dadurch gekennzeichnet,** daß die Breite der Schneide an einem Ende des Drehmeißels (11) um soviel größer ist als der Durchmesser des zylindrischen Mittelabschnitts, daß eine Seitenschneide und/oder die Schneidenecke über die seitliche Begrenzungsebene des Werkzeugschafts (1) hinausragt.

5. Schneidwerkzeug nach einem vorhergehenden Anspruch,
**dadurch gekennzeichnet,**
daß am Ende der Bohrung (5) eine Entlüftungsbohrung vorgesehen ist.

6. Schneidwerkzeug nach einem vorhergehenden Anspruch,
**dadurch gekennzeichnet,**
daß der Drehmeißel (11) an beiden Enden (13, 14) eine Stirnschneide (18) und beiderseits der Stirnschneide (18) je eine Seitenschneide (20) aufweist.

7. Schneidwerkzeug nach Anspruch 6,
**dadurch gekennzeichnet,**
daß die Spanfläche (22) des Drehmeißels (11) eine Hohlkehle bildet.

8. Schneidwerkzeug nach Anspruch 6 oder 7,
**dadurch gekennzeichnet,**
daß die Seitenschneiden (20) vom Mittelabschnitt aus im spitzen Winkel auseinanderlaufen.

9. Schneidwerkzeug nach einem vorhergehenden Anspruch,
**dadurch gekennzeichnet,**
daß die Mantelfläche des Mittelabschnitts (12) im Bereich der Aussparung (17) einen ringförmigen Freistich (16) aufweist.

10. Schneidwerkzeug nach einem vorhergehenden Anspruch,
**dadurch gekennzeichnet,**
daß der Drehmeißel (11, 42) aus einem Abschnitt von Rundmaterial hergestellt ist, dessen Ende bzw. Enden (13, 14) nach dem Rundschleifen des Außendurchmessers zur Bildung der Schneiden (18, 20) plangeschliffen sind.

11. Schneidwerkzeug zum Stirnstechen, bestehend aus einem Werkzeugschaft mit einem an seinem vorderen Ende durch einen kreiszylindrischen, in seiner Krümmung dem Stirnstechdurchmesser angepaßten Wandabschnitt gebildeten Schweif (33) und einem an dem Schweif lösbar befestigten, auswechselbaren Drehmeißel (42) mit einer Schneide (49), deren Breite größer ist als die Wanddicke des Schweifs,
**dadurch gekennzeichnet,**
daß der Schweif (33) mit einer Stufenbohrung versehen ist, deren Mittelachse in der Mitte der Wand des Schweifs (33) und parallel zu seiner Zylinderachse verläuft und deren vorderer, in der Stirnfläche des Schweifs mündender Bohrungsabschnitt (35) im Durchmesser größer und deren hinterer Bohrungsabschnitt (34) im Durchmesser kleiner ist als die Wanddicke des Schweifs (33), daß der Drehmeißel (42) mit den Wandflächen der Stufenbohrung angepaßten Zylinderflächen in beide Bohrungsabschnitte (34, 35) der Stufenbohrung eingreift und durch die Spannschraube (41) im hinteren Bohrungsabschnitt (34) festspannbar ist und daß der obere der Spanfläche (47) des Drehmeißels (42) benachbarte Teil des Schweifs (33) bis auf einen kleinen, den Drehmeißel übergreifenden Teil (36) des vorderen Bohrungsabschnitts (35) verkürzt bzw. ausgespart ist.

12. Schneidwerkzeug nach Anspruch 11,
**dadurch gekennzeichnet,**
daß der Schweif (33) sich über einen Umfangswinkel von wenigstens 180° erstreckt.

13. Schneidwerkzeug nach Anspruch 12,
**dadurch gekennzeichnet,**
daß der Schweif (33) durch einen geschlossenen Kreiszylinder gebildet ist, der eine an die Spanfläche (47) des Drehmeißels (42) angrenzende Aussparung für die Spanableitung aufweist.

14. Schneidwerkzeug nach einem der Ansprüche 11 bis 13,
**dadurch gekennzeichnet,**
daß die Spanfläche (47) des Drehmeißels durch eine Hohlkehle gebildet ist, deren Krümmungsachse etwa senkrecht auf der Schneidenkante steht und daß sich an die Hohlkehle eine Spanleitfläche (48) anschließt, die von der Hohlkehle aus nach oben ansteigt und schräg zur Mittelachse des Schweifes (33) verläuft.

15. Schneidwerkzeug zum Einstechen, bestehend aus einem Werkzeugschaft mit einem an seinem vorderen Ende angeordneten, durch eine ebene Platte gebildeten Schwert und einem an dem Schwert lösbar befestigten, auswechselbaren Drehmeißel, dessen Schneide breiter ist als die Wanddicke des Schwerts,
**dadurch gekennzeichnet,**
daß das Schwert mit einer Stufenbohrung versehen ist, deren Mittelachse etwa in seiner Mittelebene verläuft und deren vorderer, in der Stirnfläche des Schwerts mündender Bohrungsabschnitt im Durchmesser größer und deren hinterer Bohrungsabschnitt im Durchmesser kleiner ist als die Wanddicke des Schwerts, daß der Drehmeißel mit den Wandflächen der Stufenbohrung angepaßten Zylinderflächen in beide Bohrungsabschnitte der Stufenbohrung eingreift und durch Spannmittel im hinteren Bohrungsabschnitt festspannbar ist, und daß der obere, der Spanfläche der Schneide benachbarte Teil des Schwerts bis auf einen kleinen, den Drehmeißel übergreifenden Teil des vorderen Bohrungsabschnitts verkürzt bzw. ausgespart ist.

## Claims

1. A cutting tool for chip-forming metal working, especially for recessing and off-cutting operations, comprising a turning tool (11) insertable into a bore (5) at the front end of a tool shaft (1) consisting of a one-piece, rigid body, with the turning tool having cutting edges formed on one or on both ends of a cylindrical central section insertable into the bore, and a central recess (16,17) provided in the central section (12) which is engaged, for position locking in the axial direction, by a bolt screw (9) screwed into a threaded bore radially terminating in the front-sided area of the bore,
characterized in that the bore (5) provided in the tool shaft (1) is finished in the tolerance fit H 7 and the central section (12) of the turning tool (11) is finished in the tolerance fit h 6 oder j 6 are finished so as to form a sliding fit, that the threaded bore (8) extending from the upper side (7) of the tool shaft (1) terminates in the bore (5), and that the bolt screw (9), on the bottom side thereof, exhibits a cylindrical section (10) engaging, in form-locking manner, the recess (16,17) in the turning tool (11) (tolerance zones according to DIN 7151).

2. A cutting tool according to claim 1,
characterized in that the bore (5) is inclined at an angle relative to the longitudinal axis of the tool shaft (1) in the sense of an enlarged rake angle on the turning tool (11).

3. A cutting tool according to claims 1 or 2,
characterized in that the bore (5), in the horizontal direction, extends at an angle to the longitudinal axis of the tool shaft (1) such that the angle of the cutting edge protrudes beyond the lateral limitation plane of the tool shaft (1).

4. A cutting tool according to any one of the preceding claims,
characterized in that the width of the cutting edge, on one end of the turning tool (11), is larger than the diameter of the cylindrical central section by such an amount that a lateral cutting edge and/or the angle of the cutting edge protrudes beyond the lateral limitation plane of the tool shaft (1).

5. A cutting tool according to any one of the preceding claims,
characterized in that a vent hole is provided on the end of the bore (5).

6. A cutting tool according to any one of the preceding claims,
characterized in that the turning tool (11), on either end (13,14) comprises a front-sided cutting edge (18) and on either side of the front-sided cutting edge (18) respectively comprises one lateral cutting edge (20).

7. A cutting tool according to claim 6,
characterized in that the cutting face (22) of the turning tool (11) forms a fillet.

8. A cutting tool according to claims 6 or 7,
characterized in that the lateral cutting edges (20), starting from the central section (12), diverge at an acute angle.

9. A cutting tool according to any one of the preceding claims,
characterized in that the cylindrical surface of the central section (12), in the area of the recess (17), exhibits an annular cut (16).

10. A cutting tool according to any one of the preceding claims,
characterized in that the turning tool (11,42) is made of a section of round material, the end or ends (13,14) of which are surface ground after circular grinding of the outer diameter to form the cutting edges (18,20).

11. A cutting tool for face cutting comprising a tool shaft having a tail (33) formed on the front-sided end thereof by a circular-cylindrical wall section conforming in curvature to the face cut diameter, and a replaceable turning tool (42) releasably attached to the tail and having a cutting edge (49) the width of which is in excess of the wall thickness of the tail,

characterized in that the tail (33) is provided with a bore of stepped configuration the central axis of which extends centrally of the wall of the tail (33) and in parallel to the cylindrical axis thereof, and the front-sided bore section (35) thereof terminating in the front face of the tail is larger in diameter and the rear-sided bore section (34) is smaller in diameter than the wall thickness of the tail (33), that the turning tool (42) with the cylindrical faces conforming to the wall faces of the stepped bore engages both wall sections (34,35) of the stepped bore and is lockable in the rearward bore section (34) by the bolt screw (41), and that the upper portion of the tail (33) adjacent the cutting face (47) of the turning tool (42) is reduced or recessed except for the small portion (36) of the front-sided bore section (35) overlapping the turning tool.

12. A cutting tool according to claim 11,
**characterized** in that the tail (33) extends across a circumferential angle of at least 180°.

13. A cutting tool according to claim 12,
**characterized** in that the fret (33) is formed by a closed circular cylinder having a recess for the chip removal adjacent the cutting face (47) of the turning tool (42).

14. A cutting tool according to any one of claims 11 to 13,
**characterized** in that the cutting face (47) of the turning tool is formed by a fillet the axis of curvature of which is approximately normal to the cutting edge, and that the fillet is followed by a chip- conveying face (48) extending from the fillet upwardly and in sloping direction to the central axis of the tail (33).

15. A cutting tool for recessing operations, comprising a tool shaft with a sword diposed on the front end thereof and formed by a planar plate, and a replaceable turning tool releasably attached to the sword the cutting edge of which is broader than the wall thickness of the sword,

**characterized** in that the sword is provided with a bore of stepped configuration the central axis of which extends approximately in the cental plane thereof and the front-sided bore section thereof terminating in the front face of the sword is larger in diameter and the rear-sided bore section is smaller in diameter than the wall thickness of the sword, that the turning tool engages with cylindrical faces conforming to the wall faces of the stepped bore engages both bore sections of the stepped bore and is lockable by clamping means in the rear-sided bore section, and that the upper portion of the sword adjacent the cutting face of the cutting edge is reduced or recessed except for a small portion of the front-sided bore section overlapping the turning tool.

**Revendications**

1. Outil de coupe pour l'usinage de métaux par enlèvement de copeaux, notamment de percage et de coupage, comportant un outil de tours (11) insérable dans un alésage (5) prévu à l'extrémité d'avant d'une tige d'outil (1) formée d'un corps d'une seule partie rigide, outil de tours lequel comportant des taillants au moins à une extrémités d'une section centrale cylindriques insérable dans l'alésage, et comportant dans la section centrale (12) un évidement (16,17) centrale en engrènement par une vis de blocage (9), pour l'arrèter la position en sens axial visée dans an alésage fileté débouchant radialement dans la zone d'avant de l'alésage,

**caractérisé** en ce que l'alésage (5) dans la tige d'outil (1) dans la tolérance d'ajustement H7 et la section centrale (12) de l'outil de tours (11) dans la tolérance d'ajustement h 6 ou j 6, sont travaillés de finissage pour former un ajustement appuyé, que l'alésage fileté (8) débouche dès la partie supérieure (7) de la tige d'outil (1) dans l'alésage (5), et que la vis de blocage (9) sur sa partie inférieure, comporte une section cylindrique (10) s'engrènant de maière commandée mécaniquement avec l'évidement (16,17) dans l'outil de tours (11) (zones de tolérance selon DIN 7151).

2. Outil de coupe selon la revendication 1,

**caractérisé** en ce que l'alésage (5) est incliné faisant un angle avec l'axe longitudinal de la tige d'outil (1) en sens d'un élargissement de l'angle d'usinage avec l'outil de tours (11).

3. Outil selon la revendication 1 ou 2,

**caractérisé** en ce que l'aséage (5) s'étend en sens horizontal faisant an angle avec l'axe longitudinal de la tige d'outil (1) tellement que l'angle du taillant s'élève au dessus de plan terminant latéral de la tige d'outil (1).

4. Outil selon l'une qelconque des revendications précédentes,

**caratérisé** en ce que la largeur du taillant à une extrémité de l'outil de tours (11) est plus large que le diamètre de la section centrale cylindrique tellement que'un taillant latéral et/ou l'anale de taillant s'élève au dessus le plan terminant latéral de la tige d'outil (1).

5. Outil de coupe selon l'une quelconque des revendications précédentes,

**caractérisé** en ce qu'un alésage d'aération est prévu au bout de l'alésage (5).

6. Outil selon l'une quelconque des revendications précédentes,

caractérisé en ce que l'outil de tours (11) comporte aux deux extrémités (13,14) un taillant frontale (18) et un taillant latérale (20) à chaque côté du taillant frontal (18).

7. Outil selon la revendication 6,

caractérisée en ce que la face à l'usinage (20) de l'outil de tours (11) forme une gorge creuse.

8. Outil selon la revendications 6 ou 7,

caractérisé en ce que les taillants latérals (10) se divergent dès la section centrale à un angle aigue.

9. Outil selon l'une quelconque des revendicatations précédentes,

caractérisé en ce que la surface cylindrique de la section centrale (12) dans la zone de l'évidement (17) comporte une coupe annulaire (16).

10. Outil selon l'une qelconque des revendications précédentes,

caractérisé en ce que l'outil de tours (11,42) est formé d'une section de ronds extrémité(s) (13,14) desquel est( sont) affuté(s) plans après rectification cylindrique de diamètre extérieur pour former des taillants (18,20).

11. Outil à percer du front, comportant une tige d'outil ayant une chevelure (33) formée à son extrémité d'avant par une section circulaire-cylindrique de paroi conformée en curvature au diamètere de perçage du front et un outil de tour (42) remplaçable et fixé de manière detachable à la chevelure, ayant un taillant (49) la largeur duquel est plus large que l'épaisseur de la paroi de la chevelure,

caractérisé en ce que la chevelure (33) est prévue d'un alésage à gradins l'axe central duquel s'étend au centre de la paroi de la chevelure (33) et en parallèle à son axe cylindrique et la section d'alésage (35) d'avant duquel débouchant dans la face frontale de la chevelure en diamètre est plus large et la section derrière d'alésage (34) duquel en diamètre est plus petite que la largeur de paroi de la chevelure (33 , que l'outil de tours (42) s'engrène avec des faces cylindriques conformées au faces de paroi de l'alésage à gradins en les deux sections (34,35) de l'alésage à gradins, et est fixable par serrage dans la section d'alésage derrière (34) par l'intermédiaire de la vis de blocage (41), et que la partie de la chevelure (33) supérieure au voisinage de la face (47) de l'outil de tours (42) est réduite espectivement évidée à l'exception d' une partie petite (36) de la section d'alésage d'avant (35) couvrant l'outil de tours.

12. Outil selon la revendication 11,

caractérisé en ce que la chevelure (33) s'étend à un angle périphérique d'au moins 180˚.

13. Outil selon la revendication 12,

caractérisé en ce que la chevelure (33) est formée par un cylindre circulaire comportant un évidement pour l'écoulement des copeaux au voisinage de la face d'usinage (47) de l'outil à tours (42).

14. Outil selon l'une quelconque des revendications 11-13,

caractérisé en ce que la face d'usinage (47) de l'outil de tours est formée par une gorge creuse l'axe de curvature de laquelle est à peut près vertical relatif à l'arête de coupe et que la gorge creuse est suivite par une face (48) d'écoulement de copeaux qui monte en haut dès la gorge creuse et s'étend en biais à l'axe centrale de la chevelure (33).

15. Outil à percer, comportant une tige d'outil avec une épée disposée à son extrémité d'avant et formée par une plaque plane, et un outil de tours remplacable fixé de manière détachabe à l'épée, le taillant duquel est plus large que l'élargeur de paroi de l'épée,

caractérisé en ce que l'épée est prévue d'un alésage à gradins, l'axe centrale duquel s'étend à peut près dans son plan central et la section d'alésage d'avant duquel débouchant dans la surface frontale de l'épée en diamètre est plus grande et la section d'alésage arrière duquel en diamètre est plus petite que l'élargeur de paroi de l'épée, que l'outil de tours avec des surfaces cylindriques conformées aux faces de paroi de l'alésage à gradins s'engrène aux deux sections de alésage à gradins et est fixable par serrage dans la section arrière de l'alésage par l'intermédiaire de moyens de serrage, et que la partie de l'épée supérieure au voisinage de la face d'usinage du taillant est réduite respectivelment évidé à l'exception d'une partie petite de la partie d'alésage fronale couvrant l'outil de tours.

EP 0 264 642 B1

FIG.1

FIG. 2

FIG. 3

FIG. 4

FIG. 5

FIG. 6